# EUROPÄISCHE PATENTSCHRIFT

(11) **EP 2 024 222 B1**
(45) Veröffentlichungstag und Bekanntmachung des Hinweises auf die Patenterteilung: **09.03.2011**
(21) Anmeldenummer: 07725573.5
(22) Anmeldetag: 25.05.2007
(51) Int. Cl.: B62D 25/08, B62D 65/16, B60Q 1/04, B60R 19/24

(54) **STOSSFÄNGERMODUL**
FENDER MODULE
MODULE PARE-CHOCS

(30) Priorität: 02.06.2006 DE 102006026255
(43) Veröffentlichungstag der Anmeldung: 18.02.2009
(73) Patentinhaber: Peguform GmbH, 79268 Bötzingen (DE)
(72) Erfinder: BREISACHER, Michael, Rochester Hills, MI 48307 (US)
(74) Vertreter: Neunert, Peter Andreas
(86) Internationale Anmeldenummer: PCT/EP2007/004677
(87) Internationale Veröffentlichungsnummer: WO 2007/140892

(56) Entgegenhaltungen:
- EP-A- 1 600 361
- EP-A- 1 623 873
- WO-A-2006/120359
- US-A1- 2002 073 529

## Beschreibung

Die vorliegende Erfindung betrifft ein Stoßfängermodul nach dem Oberbegriff des Anspruchs 1 sowie ein Verfahren zu seiner Herstellung.

Üblicherweise werden Scheinwerferanordnungen für Kraftfahrzeuge entsprechend ihrer theoretisch exakten Position am Frontendträger befestigt und ausgerichtet. Dabei erfolgt die Ausrichtung der Scheinwerfer in einer Scheinwerferjustieranlage während der Vormontage des Frontendmoduls. Aufgrund großer Maßabweichungen der angrenzenden karosserieseitigen Bauteile, wie z. B. Längsträger, Motorhaube oder Kotflügel, ist häufig eine aufwändige Nachjustierung der Scheinwerfer erforderlich, um die geforderten Spalt- und Fugenverläufe zu erreichen. Dazu werden neben der teuren Scheinwerferjustieranlage zusätzlich ebenfalls teure Toleranzausgleichselemente für die Endjustierung eingesetzt. Somit ist die Justierung der Scheinwerfer insgesamt ein relativ kosten- und zeitaufwändiger Schritt.

Dabei spielt für die Wertanmutung des Kraftfahrzeugs ein exakter, homogener und enger Spalt- und Fugenverlauf bei der Anordnung von Scheinwerfern eine wesentlich größere Rolle als ihre theoretisch exakte Ausrichtung. Es ist daher vorteilhaft, den Schweinwerfer in eine Öffnung eines einzigen Bauteils einzusetzen, so dass der homogene Fugenverlauf problemlos eingehalten werden kann.

In der DE 196 15 026 A1 wird eine Befestigungsvorrichtung für einen Scheinwerfer mit einem Scheinwerfergehäuse beschrieben, wobei das Scheinwerfergehäuse mittels federnd wirkender Rast- oder Clipselementen am Randbereich einer Öffnung eines Bauteils des Frontendmoduls montiert ist. Bei diesem Bauteil kann es sich beispielsweise um die Stoßfängerabdeckung handeln. Das Scheinwerfergehäuse ist mittels der oben genannten Rast- oder Clipselementen vom Motorraum her lösbar. Zum Wechseln der Glühlampen oder Austausch des Scheinwerfers muss motorraumseitig ein ausreichender Raum frei gehalten werden. Dieser Raum ist für andere Bauteile nicht nutzbar, was angesichts des zunehmenden Trends bei Kraftfahrzeugen zu einer kompakten Bauweise ein Nachteil darstellt.

In der EP 1 623 873 A1 wird ein Stoßfängermodul eines Kraftfahrzeugs beschrieben, das eine Stoßfängerabdeckung, zwei Stützstrukturen für Scheinwerfer, zwei Scheinwerfer sowie eine Verstärkung aufweist, die die beiden Stützstrukturen für die Scheinwerfer miteinander verbindet. Zwar können bei dieser Anordnung die Scheinwerfereinheiten platzsparend von oben oder vorne in die Stützstruktur eingesetzt werden, jedoch müssen, da es sich um eine sehr starre Anordnung handelt, bei dieser Anordnung nach dem Einbau des Stoßfängermoduls wiederum mehrere verschiedene Bauteile in ihrem Fugenverlauf dem Scheinwerfer angepasst werden, was eine zusätzliche Justierung erforderlich macht.

In der US 2002/0073529 A1 wird ein Frontendmodul zur Montage am Frontendträger beschrieben, der dem Oberbegriff des Anspruchs 1 entspricht. Dieser Frontendmodul wird zunächst mit Hilfe von Schablonen aus vielen Einzelkomponenten zusanmengebaut, um anschließend am Frontendträger befestigt zu werden. Für die Befestigung am Frontendträger selber *sind* keine zusätzlichen Nachjustierungen erforderlich, jedoch ist der Zusammenbau der zahlreichen Einzekomponenten zum Frontendmodul aufwändig, wobei die Einzelkomponenten zueinander und aufeinander abgestimmt werden müssen. Ein weiterer Nachteil ist, dass die Scheinwerfer im Modul selber rückseitig befestigt sind, wodurch ein Glühlampen- oder Scheinwerferwechsel erschwert wird.

Es besteht somit weiterhin der Bedarf an einer Befestigungseinrichtung für Frontscheinwerfer, die es erlaubt, Frontscheinwerfer ohne zusätzliches Justieren mit einem homogenen und engen Spalt- und Fugenverlauf einzusetzen und dabei gleichzeitig einen problemlosen und platzsparenden Glühlampen- oder Scheinwerferwechsel zu gewährleisten.

Gelöst wird diese Aufgabe durch ein Stoßfängermodul gemäß den Merkmalen des Anspruchs 1 sowie ein Verfahren zu seiner Herstellung gemäß den Merkmalen des Anspruchs 10. Vorteilhafte Ausführungsformen sind in den Unteransprüchen wiedergegeben.

Ein homogener Spalt- und Fugenverlauf im Bereich des Scheinwerfers ohne aufwändiges Vor- und/oder Nachjustieren von Bauteilen wird dadurch erreicht, dass der Scheinwerfer zunächst mittels einer nach oben hin offenen Stützstruktur fest mit der Stoßfängerabdeckung verbunden wird und so zu einem Stoßfängermodul zur Montage an einen Frontendträger kombiniert wird, das mindestens die Stoßfängerabdeckung, Scheinwerfer und die entsprechende Stützstruktur umfasst. Die Form der Stützstruktur ist dabei so gewählt, dass sie mit der Form des Scheinwerfers korrespondiert, so dass dieser passgenau mit einem homogenen Spalt- und Fugenverlauf in die Stützstruktur eingesetzt werden kann. Dabei ist die Stützstruktur muldenförmig ausgebildet, so dass sich diese über die wesentlichen und am meisten ins Auge fallenden Bereiche des Fugenverlaufs zwischen Scheinwerfer und Karosseriebauteilen erstreckt. Die Stützstruktur weist in diesen Bereichen Führungen auf, welche Scheinwerfer und Stoßfängerabdeckung definiert zueinander positionieren. Auf diese Weise ist ein problemloses Einsetzen des Scheinwerfers mit einem homogenen Spalt möglich.

Üblicherweise wird die Stoßfängerabdeckung erst nach den Scheinwerfern montiert, hierzu muss die Stoßfängerabdeckung mit entsprechend großen Aussparungen in den Scheinwerferbereichen versehen sein, damit während der Montage ein Vorbeiführen der Stoßfängerabdeckung an den Scheinwerfern ermöglicht wird. Daraus ergeben sich zwangsläufig relativ große Fugen oder Spalten zwischen Scheinwerfer und Stoßfängerabdeckung.

Die Umkehr dieser Montagereihenfolge ermöglicht nun den Einsatz einer passgenau geformten Stützstruktur, in die der Scheinwerfer nun mit einem minimalen Spalt eingesetzt werden kann.

Die Stützstruktur kann dabei den Scheinwerfer hinterschnittig umgreifen, wobei dieser hinterschnittige Bereich Bestandteil der lackierten Stoßfängerabdeckung ist, was den zusätzlichen Vorteil hat, dass der Spalt zwischen Scheinwerfer und Stoßfängerabdeckung somit auch lackiert ist, wodurch die Wertanmutung zusätzlich verbessert wird.

Die Stützstruktur kann dabei direkt der Stoßfängerabdeckung angeformt sein, was den fertigungstechnischen Vorteil mit sich bringt, dass die Stoßfängerabdeckung mitsamt der Stützstruktur in einem Schritt aus einem Stück gefertigt werden kann, wobei als übliches Fertigungsverfahren beispielsweise das Spritzgießen mit thermoplastischen Kunststoffen in Frage kommt. '

Es kann jedoch auch vorteilhaft sein, wenn die Stützstruktur als separates Bauteil ausgeführt ist, das mit der Stoßfängerabdeckung fest über eine Clips-, Schweiß- und/oder Schraubverbindung verbunden ist. Diese Ausführungsform hat den Vorteil, dass die Stützstruktur aus einem anderen Material gefertigt werden kann als die Stoßfängerabdeckung. So können beispielsweise für Stoßfängerabdeckung und Stützstrukturen unterschiedliche Kunststoffe eingesetzt werden, an die dann auch unterschiedliche Stabilitätsanforderungen gestellt werden können.

So sieht eine vorteilhafte Ausführungsform vor, dass die Stützstruktur als ein separates Bauteil ausgeführt ist und zusätzliche Streben aufweist, welche der Stützstruktur zusätzliche Steifigkeit verleihen, um bei schweren Ausführungsformen der Scheinwerfer die hohen dynamischen Lasten bzw. Massenkräfte aufzunehmen.

Eine weitere vorteilhafte Ausführungsform sieht vor, dass für die beiden Frontscheinwerfer separate Stützstrukturen vorgesehen sind, die aus einem relativ stabilen und starren thermoplastischen Kunststoff gefertigt sind und damit dem Scheinwerfer einen festen Halt bieten, während die Stoßfängerabdeckung selber aus einem flexibleren Material gefertigt ist, was bei der Endmontage des Frontendmoduls ein zusätzliches Anpassen des Stoßfängermoduls an die restlichen Karosseriebauteile ermöglicht. Bei einer solchen Ausführungsform kann der Scheinwerfer bei der Endmontage durch einfache Führungs- bzw. Befestigungselemente den übrigen Karosseriebauteilen angepasst werden, ohne dass zusätzlich spezielle und teure Toleranzausgleichselemente eingesetzt werden müssen, um einen wertsteigernden, homogenen Fugenverlauf zu realisieren.

Die Stützstruktur selber wird vorteilhaft so ausgewählt, dass sie in Form einer Tasche oder Schublade ausgebildet ist und den Scheinwerfer im eingebauten Zustand im Wesentlichen von unten und seitlich abstützt. Die Taschen- bzw. Schubladenform kann dabei so ausgebildet sein, dass eine zusätzliche Abstützung im hinteren Bereich möglich ist. Bei der erfindungsgemäßen Stützstruktur kann der Scheinwerfer ohne Platzprobleme von oben und/oder von vorne eingesetzt werden und es ist kein zusätzlicher Platz motorseitig für einen Scheinwerfer- oder Glühbirnenwechsel erforderlich.

Bei einer weiteren vorteilhaften Ausführungsform weist die Stützstruktur Elemente zur Führung, Befestigung und Toleranzanpassung des Scheinwerfers auf, die einerseits zur Befestigung und Anpassung des Scheinwerfers selber dienen, andererseits aber auch die Befestigung und Anpassung des Stoßfängermoduls an den Frontendträger unterstützen. So kann durch einfache Führungs- und Befestigungselemente eine passgenaue Kombination mit den übrigen Karosseriebauteilen im Frontbereich erreicht werden. Darüber hinaus kann über Auflageflächen, formschlüssige Verbindungen oder Verschraubungen eine strukturelle Einheit mit dem angrenzenden Frontendträger erreicht werden.

Die Stützstrukturen können auch zusätzliche Funktionen erfüllen und als Träger für weitere Anbauteile, wie z. B. Kabel, Schläuche oder Sensoren dienen.

Es ist auch Aufgabe der vorliegenden Erfindung, ein Verfahren zur Herstellung eines Frontendmoduls für ein Kraftfahrzeug bereitzustellen, das es ermöglicht, die Scheinwerfer im Frontbereich ohne aufwändiges Vor- oder Nachjustieren mit einem homogenen und gleichmäßigen sowie optisch einwandfreien Fugenverlauf anzuordnen.

Dazu werden die Scheinwerfer zunächst zusammen mit der Stoßfängerabdeckung und den der Form der Scheinwerfer angepassten Stützstrukturen zu einem Stoßfängermodul vormontiert, das anschließend mit dem Frontendträger zu einem Frontendmodul verbunden werden kann. Während bei der bisher gängigen Praxis in der Regel die Scheinwerfer zunächst am Frontendträger befestigt wurden und unter Zuhilfenahme einer teuren Scheinwerferjustieranlage justiert wurden, ist bei dem erfindungsgemäßen Verfahren ein Vorjustieren nun überflüssig. Die Scheinwerfer können zunächst ohne Aufwand mit Hilfe von Führungs- und Toleranzelementen mit optimalem Fugenverlauf in die muldenförmigen Stützstrukturen eingepasst werden. Das dabei entstehende Stoßfängermodul ist erfindungsgemäß flexibel genug, dass auch die Anpassung an die übrigen Karosseriebauteile, wie z. B. Motorhaube und Kotflügel durch einfache Befestigungs- und Führungselemente erfolgen kann. Die Flexibilität des Stoßfängermoduls wird dadurch erhöht, dass bei einer bevorzugten Ausführungsform der vorliegenden Entwicklung die Stützstrukturen für die jeweiligen Frontscheinwerfer separat angeordnet sind und keine versteifenden Querverbindungen zwischen den Stützstrukturen mehr vorliegen.

Im Folgenden wird die vorliegende Erfindung beispielhaft mit Hilfe von Abbildungen ausführlich erläutert. Dabei zeigen:
- Figur 1: eine perspektivische Darstellung eines Stoßfängermo- duls zur Montage an einen Frontendträger,
- Figur 2: eine perspektivische Darstellung einer Stoßfängerab- deckung mit Stützstruktur sowie eine Vergrößerung des Ausschnitts der Stützstruktur,
- Figur 3: eine perspektivische Darstellung eines Stoßfängermo- duls ohne Scheinwerfer,
- Figur 3a: einen vergrößerten Ausschnitt der Stützstruktur aus Figur 3 in Explosionsdarstellung,
- Figur 3b: eine perspektivische Darstellung eines Ausschnitts des Stoßfängermoduls mit Stützstruktur und separatem Scheinwerfer,
- Figur 4: eine Schnittdarstellung eines Ausschnitts des Stoß- fängermoduls mit Führungselementen zur Positionierung von Scheinwerfern und
- Figur 5: eine perspektivische Darstellung einer strukturellen Einheit aus Frontendträger und Stützstrukturen.

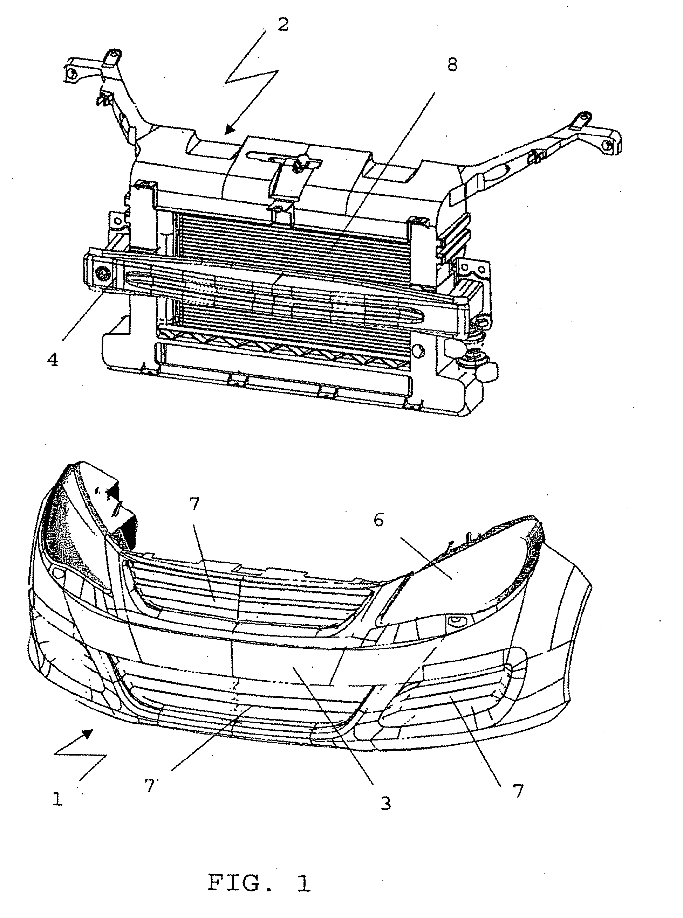

Die Figur 1 zeigt ein erfindungsgemäßes Stoßfängermodul 1, das im Wesentlichen aus einer Stoßfängerabdeckung 3 besteht, die integrierte Stützstrukturen 5 aufweist, die in dieser Darstellung von den Frontscheinwerfern 6 verdeckt sind, die in die Stützstrukturen 5 mit homogenen Fugenverlauf eingesetzt sind.

Als zusätzliche Bauelemente sind verschiedene Kühlergrillstrukturen 7 in die Stoßfängerabdeckung 3 integriert. Darüber hinaus ist in der Figur 1 ein getrennt gezeichneter Frontendträger 2 mit Stoßfänger-Biegeträger 4 und Kühler 8 zu erkennen. Diese Baugruppe kann mit dem Stoßfängermodul 1 in der in Figur 1 gezeigten Ausführungsform direkt zu einem Frontendmodul kombiniert werden und dabei beispielsweise über entsprechende Auflageflächen, formschlüssige Verbindungen oder Verschraubungen miteinander zu einer strukturellen Einheit verbunden werden.

In einer weiteren Ausführungsform wird zunächst die Baugruppe bestehend aus Frontendträger 2, Stoßfänger-Biegeträger 4 und Kühler 8 am Fahrzeug angebracht und anschließend wird das vormontierte Stoßfängermodul, bestehend aus der Stoßfängerabdeckung 3 mit den Stützstrukturen 5, den Kühlergrillstrukturen 7, den Scheinwerfern 6 sowie eventuellen weiteren Einbauteilen an das Fahrzeug montiert.

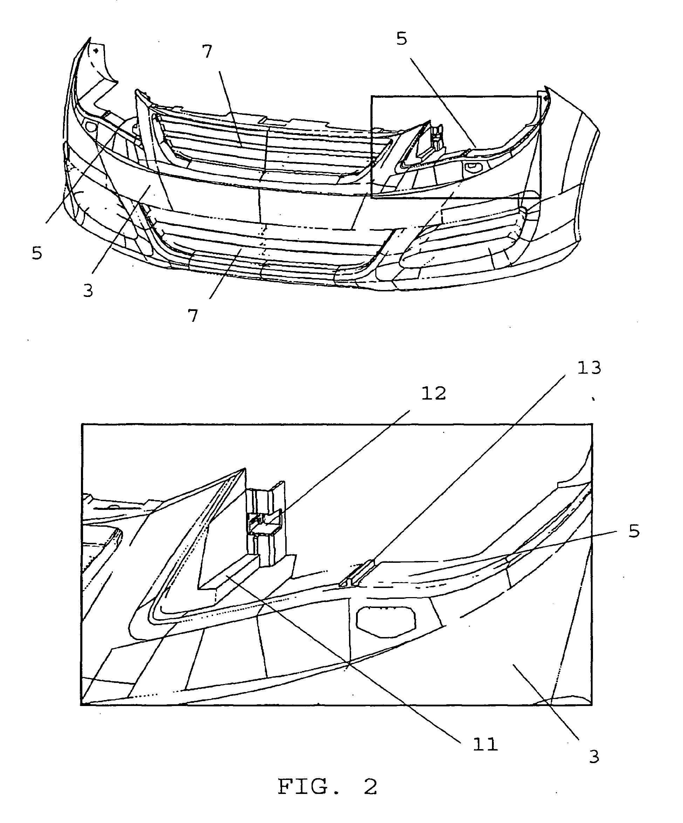

Die Figur 2 zeigt eine Stoßfängerabdeckung 3 mit einer erfindungsgemäßen Stützstruktur 5 für einen Scheinwerfer 6. In dieser Darstellungsweise ist die muldenförmige Ausbildung der Stützstruktur 5 zu erkennen, die der Form des Scheinwerfers 6 weitestgehend angepasst ist. Neben der Stützstruktur 5 für den Scheinwerfer 6 sind in die Stoßfängerabdeckung 3 zusätzliche Kühlergrillanordnungen 7 integriert. Darüber hinaus ist in Figur 2 ein vergrößerter Ausschnitt der Stützstruktur 5 wiedergegeben, der insbesondere die Führungs-Befestigungselemente 11, 12, 13 für den Scheinwerfer 6 erkennen lässt.

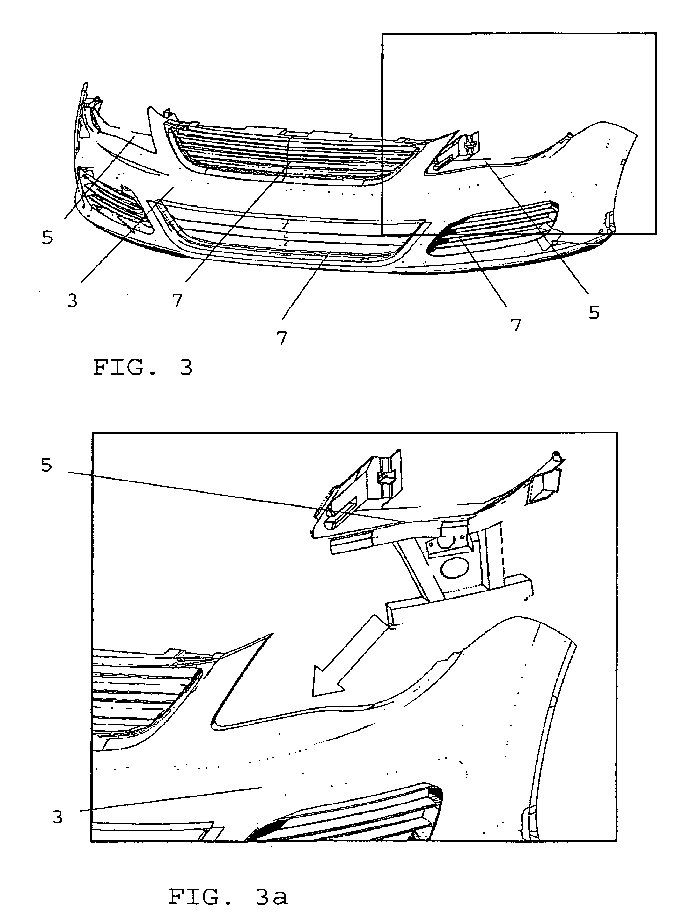

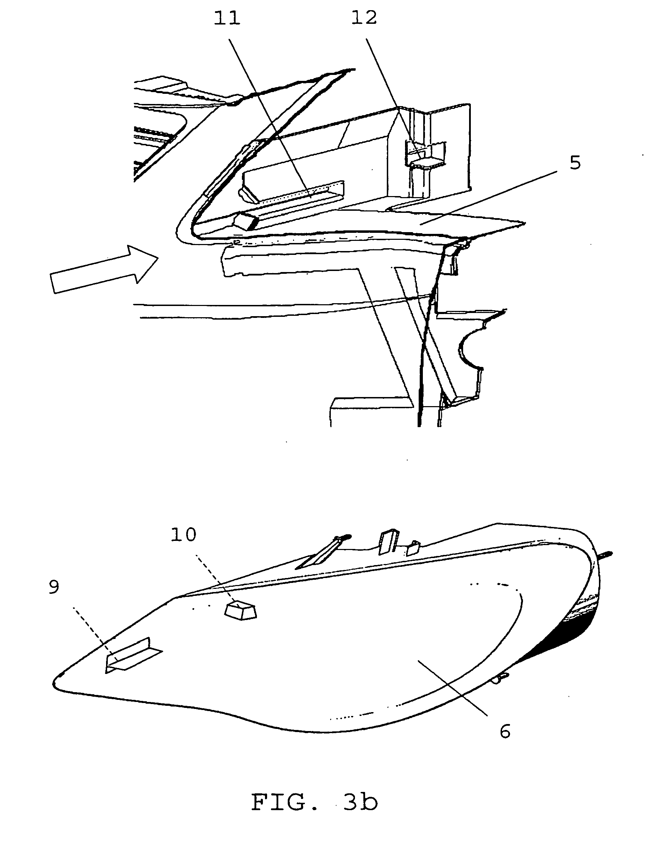

In der Figur 3 ist ein Ausschnitt der Stützstruktur 5 in der Stoßfängerabdeckung 3 zu erkennen. Die Stützstruktur 5 ist in diesem Fall als separates Bauteil ausgebildet, was insbesondere in dem vergrößerten Ausschnitt der Figur 3a in der Explosionsdarstellung verdeutlicht wird. Auch die separate Ausführungsform weist Führungs- und Befestigungselemente 11, 12 auf, die für die passgenaue Anordnung des Scheinwerfers 6 genutzt werden.

Der Scheinwerfer 6 selber ist in der Figur 3b separat abgebildet. Er weist auf seiner Rückseite entsprechende Führungs- und Befestigungselemente 9, 10 auf, die mit den Führungs- und Befestigungselementen 11, 12 der Stützstruktur 5 korrespondieren.

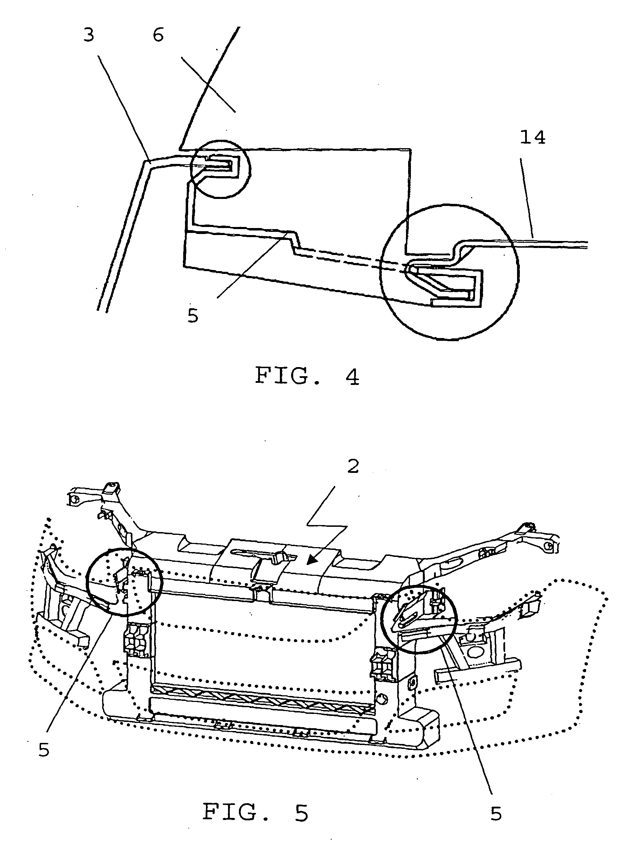

Die Figur 4 zeigt in einer Schnittdarstellung in einem Ausschnitt die Positionierung des Scheinwerfers 6 mittels Stützstruktur 5 in der Stoßfängerabdeckung 3. Dabei ist ein weiteres Führungselement 14 zu erkennen, dass im Scheinwerfer 6 integriert ist, mit dem der Scheinwerfer 6 im Stützelement 5 fixiert wird.

Die Figur 5 zeigt die Ausbildung einer strukturellen Einheit zwischen Frontendträger 2 und den separaten Stützstrukturen 5 über Auflageflächen und formschlüssige Verbindungen.

### Bezugszeichenliste

- 1: Stoßfängermodul
- 2: Frontendträger
- 3: Stoßfängerabdeckung
- 4: Stoßfänger-Biegeträger
- 5: Stützstruktur
- 6: Scheinwerfer
- 7: Kühlergrill
- 8: Kühler
- 9: Führungs- und Befestigungselement
- 10: Führungs- und Befestigungselement
- 11: Führungs- und Befestigungselement
- 12: Führungs- und Befestigungselement
- 13: Führungs- und Befestigungselement
- 14: Führungselement Scheinwerfer

## Patentansprüche

1. Stoßfängermodul (1) für ein Kraftfahrzeug zur Montage an einen Frontendträger (2) mit
- einer Stoßfängerabdeckung (3)
- mindestens einer Stützstruktur (5) für Scheinwerfer (6) sowie
- in die Stützstruktur (5) eingesetzten Scheinwerfern (6), wobei
die Stützstruktur (5) muldenförmig in die Stoßfängerabdeckung (3) integriert ist, wobei die Form der Stützstruktur (5) korrespondierend zur Form des Scheinwerfers (6) ausgeführt ist und der Scheinwerfer (6) passgenau mit einem homogenen Spalt- und Fugenverlauf in die Stützstruktur (5) einsetzbar ist,
**dadurch gekennzeichnet, dass** die Stützstruktur (5) nach oben hin offen ist und in Form einer nach oben hin offenen Tasche oder Schublade ausgebildet ist und den Scheinwerfer (6) im eingebauten Zustand im Wesentlichen von unten und seitlich abstützt, wobei der Scheinwerfer (6) von vorne und/oder oben in die Stützstruktur (5) einsetzbar ist, wobei die Stützstruktur (5) Elemente (11, 12) zur Führung, Befestigung und Toleranzanpassung des Scheinwerfers, wie z.B. Führungsrippen, Bohrungen, Dome etc., aufweist, wobei der Scheinwerfer (6) zusätzliche Elemente (9, 10) zur Führung, Befestigung und Toleranzanpassung, wie z.B. Führungsrippen, Dome etc., aufweist.

2. Stoßfängermodul (1) nach Anspruch 1,
**dadurch gekennzeichnet, dass** die Stützstruktur (5) direkt an der Stoßfängerabdeckung (3) angeformt ist.

3. Stoßfängermodul nach Anspruch 1,
**dadurch gekennzeichnet, dass** die Stützstruktur (5) als separates Bauteil ausgeführt ist, und mit der Stoßfängerabdeckung (3) fest über eine Clips-, Schweiß- und/oder Schraubverbindung verbunden ist.

4. Stoßfängermodul nach einem der Ansprüche 1 bis 3,
**dadurch gekennzeichnet, dass** die Stoßfängerabdeckung (3) jeweils eine separate Stützstruktur (5) für die beiden Frontscheinwerfer (6) aufweist.

5. Stoßfängermodul (1) nach einem der Ansprüche 1 bis 4,
**dadurch gekennzeichnet, dass** die Stoßfängerabdeckung (3) und die Stützstruktur (5) aus Kunststoff gefertigt sind.

6. Stoßfängermodul (1) nach einem der Ansprüche 1 bis 5,
**dadurch gekennzeichnet, dass** die Stoßfängerabdeckung (3) und die Stützstruktur (5) aus unterschiedlichen Kunststoffen gefertigt sind.

7. Stoßfängermodul (1) nach einem der Ansprüche 1 bis 6,
**dadurch gekennzeichnet, dass** der Scheinwerfer (6) im eingebauten Zustand zusätzlich von hinten abgestützt wird.

8. Stoßfängermodul (1) nach einem der Ansprüche 1 bis 7,
**dadurch gekennzeichnet, dass** die Stützstruktur (5) im eingebauten Zustand des Stoßfängermoduls (1) zusätzliche Anbauteile, wie z.B. Kabel, Schläuche oder Sensoren, enthält.

9. Stoßfängermodul (1) nach einem der Ansprüche 1 bis 8,
**dadurch gekennzeichnet, dass** die Stützstruktur (5) im eingebauten Zustand des Stoßfangermoduls (1) beispielsweise über Auflageflächen, formschlüssigen Verbindungen oder Verschraubungen eine strukturelle Einheit mit dem angrenzenden Frontendträger (2) bildet.

10. Verfahren zur Herstellung eines Frcntendmoduls (1) für ein Kraftfahrzeug mit
- einen Frontendträger (2),
- einer Stoßfängerabdeckung (3),
- mindestens einer Stützstruktur (5) für Scheinwerfer (6) sowie
- integrierten Scheinwerfern (6), wobei
- die, Stoβfängerabdeckung (3) zunächst mit mindestens einer nach oben hin offenen Stützstruktur (5) für einen Scheinwerfer (6) versehen wird, wobei die Stützstruktur (5) der Form, des Scheinwerfers (6) angepasst ist und Elemente (11, 12) zur Führung, Befestigung und Toleranzanpassung des Scheinwerfers, wie z.B. Führungsrippen, Bohrungen, Dome etc., aufweist, so dass die Scheinwerfer (6), die zusätzliche Elemente (9, 10) zur Führung, Befestigung und Toleranzanpassung, wie z.B. Führungsrippen, Dome etc., aufweisen mit einem homogene Spalt- und Fugenverlauf einsetzbar sind,
- die Scheinwerfer von vorne und/oder oben in die mindestens eine Stützstruktur (5) eingesetzt werden und
- anschließend das mit Scheinwerfern (6) bestückte Stoßfängermodul (1) mit einem Frontendträger (2) zu einem Frontendmodul verbunden wird,
wobei die Scheinwerfer ohne aufwändiges Vor- und/oder Nachjustieren von Bauteilen mit einem homogenen Spalt- und Fugenverlauf in die Stützstruktur eingesetzt und mittels der nach oben hin offenen Stützstruktur fest mit der Stoßfängerabdeckung verbunden werden, wobei die Stützstruktur Führungen aufweist, welche Scheinwerfer und Stoßfängerabdeckung definiert zueinander positionieren.

11. Verfahren nach Anspruch 10,
**dadurch gekennzeichnet, dass** der Frontendträger (2) vor der Montage zum Frontendmodul zusammen mit dem Kühler (8) und dem Stoßfänger-Biegeträger (4) als Submodul vorliegt.

12. **Verfahren nach Anspruch 10 oder 11,**
**dadurch gekennzeichnet, dass** der Frontendträger (2) bereits vor der Montage mit dem Stoßfängermodul (1) mit der Karosserie verbunden oder Bestandteil derselben ist.

## Claims

1. Bumper module (1) for a motor vehicle for mounting on a front end carrier (2), comprising
- a bumper cover (3),
- at least one support structure (5) for headlamps (6),
and
- headlamps (6) inserted in the support structure (5),
wherein
the support structure (5) is integrated in a trough-like manner in the bumper cover (3), wherein the shape of the support structure (5) is designed to correspond to the shape of the headlamp (6) and the headlamp (6) can be precisely inserted in the support structure (5) with a homogeneous course of the gap and join,
**characterised in that** the support structure (5) is upwardly open and is in the form of an upwardly open pocket or drawer and supports the headlamp (6) in the installed state substantially from below and from the sides, wherein the headlamp (6) can be inserted into the support structure (5) from the front and/or from above, wherein the support structure (5) has elements (11, 12) for guiding, attaching and adapting the tolerance of the headlamp, such as for example guide ribs, bores, domes, etc., and wherein the headlamp (6) has additional elements (9, 10) for guidance, attachment and tolerance adaptation, such as for example guide ribs, domes, etc.

2. Bumper module (1) according to claim 1, **characterised in that** the support structure (5) is integrally moulded directly on the bumper cover (3).

3. Bumper module according to claim 1, **characterised in that** the support structure (5) is designed as a separate component and is securely connected to the bumper cover (3) by clipping, welding and/or a screw connection.

4. Bumper module according to one of claims 1 to 3, **characterised in that** the bumper cover (3) has a separate support structure (5) for each of the two front headlamps (6).

5. Bumper module (1) according to one of claims 1 to 4, **characterised in that** the bumper cover (3) and the support structure (5) are made from plastic.

6. Bumper module (1) according to one of claims 1 to 5, **characterised in that** the bumper cover (3) and the support structure (5) are made from different plastics.

7. Bumper module (1) according to one of claims 1 to 6, **characterised in that** the headlamp (6) in the installed state is additionally supported from behind.

8. Bumper module (1) according to one of claims 1 to 7, **characterised in that** the support structure (5) in the installed state of the bumper module (1) contains additional auxiliary parts, such as for example cables, hoses or sensors.

9. Bumper module (1) according to one of claims 1 to 8, **characterised in that** the support structure (5) in the installed state of the bumper module (1) forms a structural unit with the adjoining front end carrier (2), for example via bearing surfaces, form-fitting connections or screw connections.

10. Method for producing a front end module (1) for a motor vehicle, comprising
- a front end carrier (2),
- a bumper cover (3),
- at least one support structure (5) for headlamps (6), and
- integrated headlamps (6), wherein
- the bumper cover (3) is firstly provided with at least one upwardly open support structure (5) for a headlamp (6), wherein the support structure (5) is adapted to the shape of the headlamp (6) and has elements (11, 12) for guiding, attaching and adapting the tolerance of the headlamp, such as for example guide ribs, bores, domes, etc., so that the headlamps (6), which have additional elements (9, 10) for guidance, attachment and tolerance adaptation, such as for example guide ribs, domes, etc., can be inserted with a homogeneous course of the gap and join,
- the headlamps are inserted into the at least one support structure (5) from the front and/or from above, and
- then the bumper module (1) equipped with headlamps (6) is connected to a front end carrier (2) to form a front end module,
wherein the headlamps are inserted into the support structure with a homogeneous course of the gap and join without any complicated prior and/or subsequent adjustment of components and are securely connected to the bumper cover by means of the upwardly open support structure, wherein the support structure has guides which position the headlamps and the bumper cover in a defined manner relative to one another.

11. Method according to claim 10, **characterised in that** the front end carrier (2) exists as a sub-module together with the radiator (8) and the flexible bumper carrier (4) prior to being assembled to form the front end module.

12. Method according to claim 10 or 11, **characterised in that** the front end carrier (2) is already connected to the body or forms part thereof prior to being assembled with the bumper module (1).

## Revendications

1. Module pare-chocs (1) de véhicule automobile pour être monté sur un support frontal (2), comprenant :
- un habillage de pare-chocs (3),
- au moins une structure de support (5) pour des projecteurs (6), et
- des projecteurs (6) installés dans la structure de support (5),
* la structure de support (5) étant intégrée suivant une forme d'auge dans l'habillage de pare-chocs (3),
* la forme de la structure de support (5) correspondant à la forme du projecteur (6), et le projecteur (6) est monté de manière ajustée dans la structure de support (5) avec un profil de fentes et de joints, homogène,
module **caractérisé en ce que**
la structure de support (5) est ouverte vers le haut et a la forme d'une poche ou d'un tiroir ouvert vers le haut et, à l'état installé, le projecteur (6) est pour l'essentiel soutenu par en dessous et par le côté,
* le projecteur (6) se mettant en place à partir de l'avant et/ou du dessus dans la structure de support (5),
* la structure de support (5) comportant des éléments (11, 12) pour le guidage, la fixation et la compensation des tolérances du projecteur, telles que des nervures de renforcement, des perçages, des dômes, etc..,
* le projeteur (6) comportant des éléments supplémentaires (9, 13) pour le guidage, la fixation et la compensation des tolérances telles que des nervures de guidage, des dômes, etc..

2. Module pare-chocs (1) selon la revendication 1,
**caractérisé en ce que**
la structure de support (5) est formée directement sur l'habillage de pare-chocs (3).

3. Module pare-chocs (1) selon la revendication 1,
**caractérisé en ce que**
la structure de support (5) est une pièce séparée reliée à l'habillage de pare-chocs (3), de manière solidaire par une liaison enclipée, soudée et/ou vissée.

4. Module pare-chocs (1) selon l'une des revendications 1 à 3,
**caractérisé en ce que**
l'habillage de pare-chocs (3) comporte une structure de support (5) respectivement différente pour les deux projecteurs avant 6).

5. Module pare-chocs (1) selon l'une des revendication 1 à 4,
**caractérisé en ce que**
l'habillage de pare-chocs (3) et la structure de support (5) sont fabriqués en matière plastique.

6. Module pare-chocs (1) selon l'une des revendications 1 à 5,
**caractérisé en ce que**
l'habillage de pare-chocs (3) et la structure de support (5) sont fabriqués en des matières plastiques différentes.

7. Module pare-chocs (1) selon l'une des revendications 1 à 6,
**caractérisé en ce que**
le projecteur (6) est en outre appliqué par-derrière en plus lorsqu'il est à l'état monté.

8. Module pare-chocs (1) selon l'une des revendications 1 à 7,
**caractérisé en ce que**
à l'état installé du module pare-chocs (1) la structure de support (5) comporte des pièces de montage supplémentaires telles que des câbles, tuyaux ou capteurs.

9. Module pare-chocs (1) selon l'une des revendications 1 à 8,
**caractérisé en ce que**
à l'état installé du module pare-chocs (1) la structure de support (5), forme par exemple par les surfaces d'appui, des liaisons par la forme ou des liaisons vissées avec une unité structurelle avec le support frontal (2) adjacent.

10. Procédé de fabrication d'un module avant (1) de véhicule automobile, comportant :
- un support frontal (2),
- un habillage de pare-chocs (3),
- au moins une structure de support (5) pour les projecteurs (6), et
- les projecteurs (6) intégrés, dans lesquels,
- l'habillage de pare-chocs (3), est muni tout d'abord d'au moins une structure d'appui (5) ouverte vers le haut pour un projecteur (6),
- la structure d'appui (5) étant adaptée à la forme du projecteur (6), des éléments (11, 12) pour le guidage, la fixation et la compensation des tolérances du projecteur telles que des nervures de guidage, des perçages, des dômes, etc.., de sorte que le projecteur (6) puisse utiliser les éléments supplémentaires (9, 10) pour le guidage, la fixation et la compensation des tolérances telles que les nervures de guidage, des dômes, etc.., avec un tracé homogène des fentes et des joints,
- le projecteur se plaçant à partir de l'avant et/ou du dessus dans au moins une structure de support (5), et
- ensuite, le module pare-chocs (1) garni des projecteurs (6) est relié au support frontal (2) pour former un module frontal.

11. Procédé selon la revendication 10,
**caractérisé en ce qu'**
avant le montage pour former le module frontal, le support frontal (2) est assemblé au radiateur (8) et au support déformable de pare-chocs (4) pour former un sous-ensemble.

12. Procédé selon la revendication 10 ou 11,
**caractérisé en ce que**
déjà avant le montage au module de pare-chocs (1), le support frontal (2) est relié à la carrosserie ou fait partie de celle-ci.
